# EUROPEAN PATENT SPECIFICATION

(11) **EP 2 956 015 B1**
(45) Date of publication and mention of the grant of the patent: **04.11.2020**
(21) Application number: 14704796.3
(22) Date of filing: 14.02.2014
(51) Int. Cl.: A23L 2/66, A23C 9/152, A23L 33/00, A23L 33/17, A23L 33/19

(54) **METHOD FOR RESTORING AND/OR MAINTAINING A POSITIVE NET PROTEIN BALANCE IN A CHILD**
VERFAHREN ZUR WIEDERHERSTELLUNG BZW. ZUR AUFRECHTERHALTUNG EINER POSITIVEN NETTOPROTEINBALANCE BEI EINEM KIND
PROCÉDÉ POUR LA RESTAURATION ET/OU LE MAINTIEN DE L'ÉQUILIBRE PROTÉIQUE NET POSITIF CHEZ UN ENFANT

(30) Priority: 15.02.2013 EP 13155534
(43) Date of publication of application: 23.12.2015
(73) Proprietor: Société des Produits Nestlé S.A., 1800 Vevey (CH)
(72) Inventor: BAILEY, David, CH-1053 Cugy (CH); KARAGOUNIS, Leonidas, 1066 Epalinges, Vaud (CH); MOORE, Daniel, Waterdown, Ontario L0R 2H3 (CA); OFFORD CAVIN, Elizabeth, CH-1820 Montreux (CH)
(74) Representative: Lomholt, Stig Bredsted
(86) International application number: PCT/EP2014/052975
(87) International publication number: WO 2014/125099

(56) References cited:
- FR-A1- 2 877 844
- HAY W W ET AL: "Protein for Preterm Infants: How Much is Needed? How Much is Enough? How Much is Too Much?", PEDIATRICS & NEONATOLOGY, ELSEVIER, AMSTERDAM, NL, vol. 51, no. 4, 1 August 2010 (2010-08-01) , pages 198-207, XP027215595, ISSN: 1875-9572 [retrieved on 2010-08-01]
- DATABASE GNPD [Online] MINTEL; November 1999 (1999-11), Anonymous: "Nutritional Drink", XP002699373, retrieved from www.gnpd.com Database accession no. 10063177
- DATABASE GNPD [Online] MINTEL; October 2012 (2012-10), Anonymous: "Tropical Orange Flavored Post-Game Protein recovery beverage", XP002699377, retrieved from www.gnpd.com Database accession no. 1913655

## Description

### Technical Field

This invention relates to a non-therapeutic method of restoring and/or maintaining the positive net protein balance in a child, said method comprising the use of a synthetic composition comprising proteins.

### Background of the Invention

Physical activity is an essential component for the optimal growth and development of the musculoskeletal system in children. Greater levels of physical activity have been associated with higher bone mineral density, lean mass and strength in children. However the overall protein metabolism, which is characterized by a continuous turnover and the necessary renewal of body proteins through the simultaneous processes of protein synthesis and protein breakdown, can be affected by physical activity. The physiological process of protein turnover (protein synthesis - after each meal time- minus protein breakdown - after a fasting period or after exercise or after a night of rest) naturally oscillates throughout the day.

Dietary protein plays an important role in health and wellbeing as it provides the substrates necessary to build muscle and other body proteins. However, unlike adults who have stopped growing, optimal nutrition for active youth support not only a physically active lifestyle but also must meet the energy and dietary protein requirements of growth. This is especially true of children who are approaching or at their age of peak height velocity, a period that is characterized by rapid skeletal and muscular growth. Despite the important role of dietary protein in the normal growth of tissues such as muscle and bone, there is a paucity of information on the effect of physical activity on the protein balance in children. As children follow a continuous growth process, their protein balance (or whole body protein balance) needs to be positive. This is all the more true for the net protein balance, which is the protein balance taken from time to time at the same hour of the day, in order avoiding the oscillations of the protein turnover during the day.

Thus, despite the importance of exercise and nutrition for the development of strong muscles and bones in children, there is a need to provide a nutritional system that enables a child after physical exercise while not affecting his net protein balance.

There is a need to provide a way to ensure that the best adequate individual nutritional solutions are made available to children, in order to help their muscles replenish and rebuild after physical exercise for normal, healthy growth and development.

The compositions of the present invention have been designed to restore and/or maintain a positive net protein balance in children, in particular in children after a physical exercise which gave rise to a protein breakdown.

Hay W W et al: "Protein for Preterm Infants: How Much is Needed? How Much is Enough? How Much is Too Much?", Pediatrics & Neonatology, vol. 51, no. 4, (2010), pages 198-207, discloses that preterm infants require 1.5 - 4 g protein/kg/day to achieve a positive net protein balance.

### Summary of the Invention

The present inventors have found surprisingly that the administration of a specific dose of proteins, preferably of high quality proteins such as milk-based proteins (whey proteins and casein proteins and/or soy-based proteins), as a liquid, is particularly effective for restoring and/or maintaining a positive net protein balance in children, especially after exercise.

According to the invention, there is provided a non-therapeutic method of restoring and/or maintaining a positive net protein balance in a child aged 5 to 15, said method comprising the use of a synthetic composition comprising proteins, wherein the composition is administered in a dose of about 0.10 to about 0.55, preferably about 0.20 to about 0.35, gram of proteins per kilogram of body mass of the child, said dose being administered as at least one serving given over a period of time of about 0 min (excluded) duration to about 60 min duration, preferably from 0 (excluded) to 30 minutes, wherein the starting point of said period of time is after physical exercise, and wherein the first serving is given within a period of time of 0 to 30 minutes from the starting point.

The lowest duration value corresponds to the duration for one serving.

Preferably, the composition ; used in the method of the invention has a protein content when administered as a liquid of 0.075 to 10 g/100mL, more preferably of 0.75 to 6 g/100mL. In this case the composition is preferably administered as a single serve.

In any case the proteins to be ingested by the child do not exceed the recommended amounts according to current guidelines (such as the recommendations of the World Health Organization (WHO)), taking into consideration the age of the child and the overall quantity of proteins ingested during the day.

### Detailed description of the invention

For a complete understanding of the present invention and the advantages thereof, reference is made to the following detailed description of the invention.

It should be appreciated that various embodiments of the present invention can be combined with other embodiments of the invention and are merely illustrative of the specific ways to make and use the invention, and do not limit the scope of the invention when taken into consideration with the claims and the following detailed description.

In the present description, the following words are given a definition that should be taken into account when reading and interpreting the description, examples and claims.

As used herein, the following terms have the following meanings.

The term "child" means a person aged between 5 and 15 years old. In particular, apart from specific nutritional requirement linked to their growth and development, the diet of a child is similar to that of an adult: it is a post-weaning diet.

The term "hypoallergenic composition" means a composition which is unlikely to cause allergic reactions.

The term "allergy" means an allergy which has been detected by a medical doctor and which can be treated occasionally or in a more durable manner. The term "food allergy" means an allergy with respect to a nutritional composition.

The term "nutritional" means that it nourishes a subject. The synthetic formula according to the invention is a nutritional composition, usually to be taken orally, and including a protein source.

The terms "restoring and/or maintaining a positive net protein balance" means adapting the mean protein turnover (protein synthesis minus protein breakdown) in order to maintain a positive net protein balance. The net protein balance is measured by the dietary nitrogen intake required to maintain nitrogen balance according to the oral ingestion of [¹⁵N] glycine. This is determined by the quantification of total dietary nitrogen intake minus total nitrogen loss such as through urinary excretion, which accounts for the majority (> 80%) and miscellaneous (i.e. fecal, sweat, hair, etc) losses. Whole body protein turnover (which includes but is not limited to skeletal muscles) is assessed through stable isotope technique by the oral ingestion of [¹⁵N] glycine. This technique is for use in a variety of populations including children.

The term "synthetic" means obtained by chemical and/or biological means, contrary to "natural (found in nature)". It encompasses the compositions obtained from natural products (such as cow's milk) transformed by chemical and/or biological means.

All percentages are by weight unless otherwise stated.

As used in this specification, the words "comprises", "comprising", and similar words, are not to be interpreted in an exclusive or exhaustive sense. In other words, they are intended to mean "including, but not limited to".

Any reference to prior art documents in this specification is not to be considered an admission that such prior art is widely known or forms part of the common general knowledge in the field.

The composition of the invention is aimed to restore and/or maintain a positive net protein balance in children.

The synthetic composition is for restoring and/or maintaining a positive net protein balance in a child aged 5 to 15, said composition comprising proteins, wherein the composition is administered in a dose of about 0.10 to about 0.55, preferably about 0.20 to about 0.35, gram of proteins per kilogram of body mass of the child, said dose being administered as at least one serving given over a period of time of about 0 min (excluded) duration to about 60 min duration.

The proteins may be milk-based proteins or soy-based proteins. The milk-based proteins generally comprise, preferably consist of, whey proteins and casein proteins.

Preferably, the number of servings is at least 2, preferably 3 or 4.

The composition may further comprises carbohydrate, preferably lactose, in a carbohydrate to protein ratio in the range of from about 3:1 to about 4:1, preferably in a ratio of about 3.5:1.

Preferably, the composition is administered as a liquid in a volume of 15 to 50 mL of composition per kilogram of body mass of the child.

In this case, the composition may further comprise potassium in a range of about 0.5 mmol/L to about 50 mmol/L and sodium in a range of about 20 mmol/L to about 50 mmol/L.

Still in this case, the composition may have an osmolality of about 200 to about 270 mOsm and/or an energy content of about 27 to about 30 kcal/100 mL.

The composition is especially adapted for children aged 5 to 15, preferably 8 to 15 years old.

The invention relates to a non-therapeutic method of restoring and/or maintaining a positive net protein balance in a child aged 5 to 15 at risk of protein imbalance, said method comprising the use of a synthetic composition comprising proteins, wherein the composition is administered in a dose of about 0.10 to about 0.55, preferably about 0.20 to about 0.35, gram of proteins per kilogram of body mass of the child, said dose being administered as at least one serving given over a period of time of about 0 min (excluded) duration to about 60 min duration, wherein the starting point of said period of time is after physical exercise, and wherein the first serving is given within a period of time of 0 to 30 minutes from the starting point.

A child is at "risk of protein imbalance" when the overall protein intake is lower than the overall protein needs linked to metabolism, growth and development, or exercise, For instance, after and during playing or exercising, protein needs are increased for muscle recovery and for growth and development. Unless a sufficient amount of protein is provided in due time, there is a risk of protein imbalance which may affect growth and development. In a similar fashion, a child may have an increase protein need after a period without eating, such as night time.

This non-therapeutic method comprises the use of the composition as previously described.

The synthetic nutritional composition may be in the form of a powder, liquid or concentrated liquid. The composition may be based on a cow's milk, goat's milk or buffalo milk, but also non-dairy proteins such as soy, whey and rice proteins, as well as single or blends of amino acids.

The synthetic nutritional composition may be a powdered composition, that is to be ingested as such, or that is diluted with water, or with milk, to give a final liquid product to be ingested. The composition may also be a concentrated liquid that is to be ingested as such, or that is diluted with water, or milk, to achieve a final liquid composition to be ingested. The composition may be a liquid product that is directly consumed by the child as it is. When the composition may be added to or diluted with milk, the concentration of the proteins already present in the milk (to which the composition is added) is to be taken into consideration as part of the proteins which are to be ingested by the child.

Other standard ingredients known to the skilled person for formulating a nutritional child composition may also be present in the compositions.

Thus, the composition may contain other ingredients which may act to enforce the technical effect of the components.

The composition can also contain a carbohydrate source, as mentioned above. Any carbohydrate source conventionally found in nutritional compositions such as lactose, saccharose, maltodextrin, starch and mixtures thereof may be used although the preferred source of carbohydrates is lactose.

The type of protein is not believed to be critical to the present invention provided that the minimum requirements for essential amino acid content are met and satisfactory growth is ensured. Thus, protein sources based on whey, casein and mixtures thereof may be used as well as protein sources based on soy, or even lower quality proteins supplemented with key amino acids. As far as whey proteins are concerned, the protein source may be based on acid whey or sweet whey or mixtures thereof and may include alpha-lactalbumin and beta-lactoglobulin in any desired proportions. The proteins can be at least partially hydrolyzed in order to enhance oral tolerance to allergens, especially food allergens. In that case the composition is a hypoallergenic composition. In a preferred embodiment, the composition may be cow's milk whey based infant formula. The formula may also be a hypoallergenic (HA) formula in which the cow milk proteins are (partially or extensively) hydrolysed. The formula may also be based on soy milk or a non-allergenic formula, for example one based on free amino acids.

The composition can also contain all vitamins and minerals, and other micronutrients, understood to be essential in the daily diet. Minimum requirements have been established for certain vitamins and minerals. Examples of minerals, vitamins and other nutrients optionally present in the composition of the invention include vitamin A, vitamin B1, vitamin B2, vitamin B6, vitamin B12, vitamin E, vitamin K, vitamin C, vitamin D, folic acid, inositol, niacin, biotin, pantothenic acid, choline, calcium, phosphorous, iodine, iron, magnesium, copper, zinc, manganese, chlorine, potassium, sodium, selenium, chromium, molybdenum, taurine, and L-carnitine. Minerals are usually added in salt form. The presence and amounts of specific minerals and other vitamins will vary depending on the intended population.

If necessary, the composition may contain emulsifiers and stabilisers such as soy, lecithin, citric acid esters of mono- and di-glycerides, and the like.

The composition may also contain other substances which may have a beneficial effect such as lactoferrin, nucleotides, nucleosides, gangliosides, polyamines, and the like.

The preparation of the composition will now be described by way of example.

The composition may be prepared in any suitable manner. For example, it may be prepared by blending together a protein source, an optional carbohydrate source, and an optional fat source in appropriate proportions. If used, the emulsifiers may be included at this point. The vitamins and minerals may be added at this point but are usually added later to avoid thermal degradation. Any optional lipophilic vitamins, emulsifiers and the like may be dissolved into the optional fat source prior to blending. Milk or water, preferably water, more preferably water which has been subjected to reverse osmosis, may then be mixed in to form a liquid mixture. The temperature of the water is conveniently in the range between about 50°C and about 80°C to aid dispersal of the ingredients. Commercially available liquefiers may be used to form the liquid mixture. The liquid mixture is then homogenized, for example in two stages.

The liquid mixture may then be thermally treated to reduce bacterial loads, by rapidly heating the liquid mixture to a temperature in the range between about 80°C and about 150°C for a duration between about 5 seconds and about 5 minutes, for example. This may be carried out by means of steam injection, an autoclave or a heat exchanger, for example a plate heat exchanger.

Then, the liquid mixture may be cooled to between about 60°C and about 85°C for example by flash cooling. The liquid mixture may then be again homogenized, for example in two stages between about 10 MPa and about 30 MPa in the first stage and between about 2 MPa and about 10 MPa in the second stage. The homogenized mixture may then be further cooled to add any heat sensitive components, such as vitamins and minerals. The pH and solids content of the homogenized mixture are conveniently adjusted at this point.

The homogenized mixture can be transferred to a suitable drying apparatus such as a spray dryer or freeze dryer and converted to powder. The powder should have a moisture content of less than about 5% by weight. Some of the optional carbohydrate may be added at this stage by dry-mixing along with optional probiotic bacterial strain(s), or by blending them in a syrup form, along with optional probiotic bacterial strain(s), and spray-drying (or freeze -drying).

If a liquid composition is preferred, the homogenized mixture may be sterilized then aseptically filled into suitable containers or may be first filled into the containers and then retorted.

The composition may be in the form of powder, tablets, capsules, pastilles or a liquid for example, as long as it is a suitable nutritional composition for the child. It may further contain protective hydrocolloids (such as gums, proteins, modified starches), binders, film forming agents, encapsulating agents/materials, wall/shell materials, matrix compounds, coatings, emulsifiers, surface active agents, solubilizing agents (oils, fats, waxes, lecithins etc.), adsorbents, carriers, fillers, co-compounds, dispersing agents, wetting agents, processing aids (solvents), flowing agents, taste masking agents, weighting agents, jellifying agents and gel forming agents. The supplement may also contain conventional pharmaceutical additives and adjuvants, excipients and diluents, including, but not limited to, water, gelatin of any origin, vegetable gums, lignin-sulfonate, talc, sugars, starch, gum arabic, vegetable oils, polyalkylene glycols, flavouring agents, preservatives, stabilizers, emulsifying agents, buffers, lubricants, colorants, wetting agents, fillers, and the like.

The composition can be added to a product acceptable to the child, such as an ingestible carrier or support, respectively. Examples of such carriers or supports are a pharmaceutical or a food composition.

Although the invention has been described by way of example, it should be appreciated that variations and modifications may be made without departing from the scope of the invention as defined in the claims.

The invention is further described with reference to the following example which relates to an experiment. It will be appreciated that the invention as claimed is not intended to be limited in any way by this example.

The advantages, nature, and various additional features of the invention will appear more fully upon consideration of the illustrative experiment now to be described in detail in connection with accompanying drawings. In the drawings:
FIG. 1 is a graph plotting the results of the experiment, in terms of net protein balance (g/kg) with respect to time post beverage i.e. post beverage consumption.
FIG. 2 is a bar graph plotting the results of the experiment, in terms of net protein balance (g/kg./day) with respect to each one of the three different beverages tested.

### Example

This study was designed to examine how protein ingestion affects protein balance after physical exercise in children, by measuring non-invasively changes in whole body protein synthesis, protein breakdown, and protein balance during exercise and recovery with a single oral dose of [¹⁵N] glycine with urinary enrichments of ammonia and urea measured by isotope ratio mass spectrometry.

Three milk-based drinks (containing carbohydrate, protein, and fat) were drunk by children after exercise. These three drinks were carbohydrate drinks containing a low (0.75g/100ml; Lo-PRO) and higher (1.5g/100ml; Hi-PRO) protein content and a comparative drink which was an energy-matched control (CONT; isoenergetic carbohydrate-containing beverage). In addition to the drink they received post-exercise, the children had a similar standard diet which included all macro- and micronutrients.

13 children (7 males, 6 females) aged 10-12 years completed the study in which they exercised under a controlled climate (30°C, 50% humidity) for 45mins with periods of running, cycling (variable intensity) and rest designed to simulate normal play. The 13 participants had complete data sets and were available for a per protocol analysis.

Following exercise they ingested the beverages in three equal serves over 30 min (i.e. at -30, -15, and 0min) which consisted of a milk protein-based drink (either at a dose of 0.75 or 1.5%) with additional carbohydrates that was provided at an oral dose equivalent to 150% of fluid losses during exercise in the heat.

Details of each beverage are provided in Table 1 below.

**Table 1 : composition of experimental beverages**

| | **CONT** | **Lo-PRO** | **Hi-PRO** |
|---|---|---|---|
| **Energy (kcal/100ml)** | 28 | 28.4 | 28.1 |
| **Carbohydrate (g/100ml)** | 7 | 5.3 | 5.3 |
| **Protein (g/100ml)** | 0 | 0.76 | 1.50 |
| **Fat (g/100ml)** | 0 | 0.46 | 0.10 |
| **Na+ (mmol/l)** | 41 | 41 | 41 |
| **K+ (mmol/l)** | 1 | 1 | 1 |
| **Osmolality (mOsm)** | 222 | 249 | 245 |

CONT is a comparative drink. Lo-PRO and Hi-PRO are according to the composition used in the method of the invention, Hi-PRO being particularly preferred.

For n=13 who completed the exploratory protein metabolism aspect of the trial, the absolute protein intake was 7.0±1.4, 12.6±3.4g and the relative protein intake was 0.18±0.03, and 0.32±0.07g/kg, for CONT, Lo-PRO, and Hi-PRO, respectively.

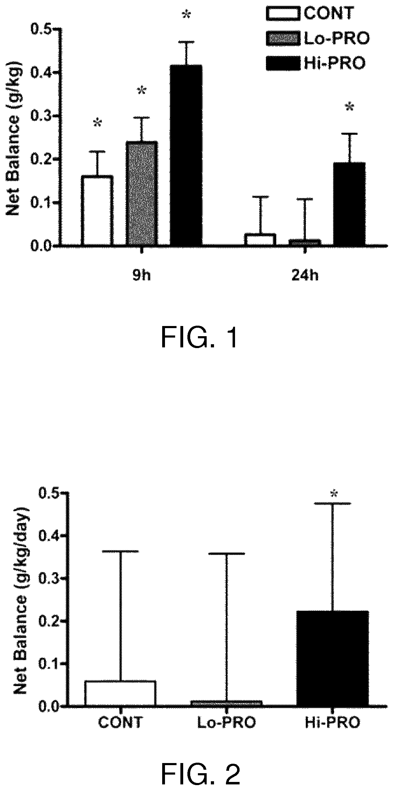

Figure 1 provides the graph plotting the results of the experiment, in terms of net protein balance (g/kg) consumption of CONT, Lo-PRO, and Hi-PRO. * indicates significantly different from "0" balance. For net protein balance (i.e., protein synthesis - protein breakdown), post-hoc analysis revealed a greater balance with Hi-PRO vs. CONT (p=0.03) and a significantly greater balance with Hi-PRO vs. Lo-PRO (p=0.03).

Within each condition, net protein balance was significantly different from zero at the 9h measurement period (all p values <0.05). Only with Hi-PRO, was net protein balance significantly different (greater) than zero during the 24h measurement period (p=0.02).

Figure 2 provides a bar graph plotting the whole body net protein balance based on 24h harmonic mean after consumption of CONT, Lo-PRO, and Hi-PRO. * Indicates value is significantly different from 0.

Net protein balance was significantly different from zero (p=0.008) for Hi-PRO only (Figure 10). Net protein balance for Lo-PRO (p=0.90) and for CONT (p=0.49) was not significantly different from zero.

As a conclusion, this experiment shows that protein-containing drinks such as Lo-PRO and Hi-PRO according to the invention, in particular Hi-PRO, affect favorably the net protein balance over 24h.

## Claims

1. A non-therapeutic method of restoring and/or maintaining a positive net protein balance in a child aged 5 to 15 in risk of protein imbalance, said method comprising ingesting a synthetic composition comprising proteins, wherein the composition is administered in a dose of 0.10 to 0.55, preferably 0.20 to 0.35, gram of proteins per kilogram of body mass of the child, said dose being administered as at least one serving given over a period of time of 0 min (excluded) duration to 60 min duration, wherein the starting point of said period of time is after physical exercise, and wherein the first serving is given within a period of time of 0 to 30 minutes from the starting point.

2. The non-therapeutic method of claim 1, wherein the proteins are milk-based proteins comprising, preferably consisting of, whey proteins and casein proteins, and/or soy-based proteins.

3. The non-therapeutic method according to any one of claims 1 and 2, wherein the number of servings is at least 2, preferably 3 or 4.

4. The non-therapeutic method according to any one of claims 1 to 3, wherein the composition is administered as a liquid in a volume of 15 to 50 mL of composition per kilogram of body mass of the child, and wherein the composition has a protein content of 0.075 to 10 g/100mL, more preferably of 0.75 to 6 g/100mL.

5. The non-therapeutic method according to claim 4, wherein said composition further comprises potassium in a range of 0.5 mmol/L to 50 mmol/L and sodium in a range of 20 mmol/L to 50 mmol/L.

6. The non-therapeutic method according to claim 5, wherein said composition has an osmolality of 200 to 270 mOsm.

7. The non-therapeutic method according to claim 5 or 6, wherein said composition has an energy content of 27 to 30 kcal/100 mL.

## Patentansprüche

1. Nicht-therapeutisches Verfahren zur Wiederherstellung und/oder Aufrechterhaltung einer positiven Nettoproteinbilanz bei einem Kind im Alter von 5 bis 15, bei dem das Risiko eines Proteinungleichgewichts besteht, wobei das Verfahren die Aufnahme einer synthetischen Zusammensetzung umfasst, die Proteine umfasst, wobei die Zusammensetzung in einer Dosis von 0,10 bis 0,55, vorzugsweise 0,20 bis 0,35 g Protein pro Kilogramm Körpermasse des Kindes verabreicht wird, wobei die Dosis als mindestens eine Portion über einen Zeitraum von 0 min (ausgeschlossen) Dauer bis 60 min Dauer verabreicht wird, wobei der Startpunkt dieses Zeitraums nach körperlicher Betätigung liegt und wobei die erste Portion innerhalb eines Zeitraums von 0 bis 30 Minuten ab dem Startpunkt erfolgt.

2. Nicht-therapeutisches Verfahren nach Anspruch 1, wobei die Proteine milchbasierte Proteine sind, die Molkenproteine und Caseinproteine und/oder Proteine auf Sojabasis umfassen und bevorzugt aus diesen bestehen.

3. Nicht-therapeutisches Verfahren nach einem der Ansprüche 1 bis 2, wobei die Anzahl der Portionen mindestens 2, vorzugsweise 3 oder 4 beträgt.

4. Nicht-therapeutisches Verfahren nach einem der Ansprüche 1 bis 3, wobei die Zusammensetzung als Flüssigkeit in einem Volumen von 15 bis 50 ml Zusammensetzung pro Kilogramm Körpermasse des Kindes verabreicht wird und wobei die Zusammensetzung einen Proteingehalt von 0,075 bis 10 g/100 ml, mehr bevorzugt von 0,75 bis 6 g/100 ml aufweist.

5. Nicht-therapeutisches Verfahren nach Anspruch 4, wobei die Zusammensetzung ferner Kalium in einem Bereich von 0,5 mmol/l bis 50 mmol/l und Natrium in einem Bereich von 20 mmol/l bis 50 mmol/l umfasst.

6. Nicht-therapeutisches Verfahren nach Anspruch 5, wobei die Zusammensetzung eine Osmolalität von 200 bis 270 mOsm aufweist.

7. Nicht-therapeutisches Verfahren nach Anspruch 5 oder 6, wobei die Zusammensetzung einen Energiegehalt von 27 bis 30 kcal/100 ml aufweist.

## Revendications

1. Procédé non thérapeutique de restauration et/ou de maintien d'un bilan protéique net positif chez un enfant âgé de 5 à 15 présentant un risque de déséquilibre protéique, ledit procédé comprenant l'ingestion d'une composition synthétique comprenant des protéines, dans lequel la composition est administrée à une dose de 0,10 à 0,55, de préférence 0,20 à 0,35, gramme de protéines par kilogramme de masse corporelle de l'enfant, ladite dose étant administrée en tant qu'au moins une portion donnée sur une période de temps d'une durée allant de 0 min (exclus) à 60 min, dans lequel le point de départ de ladite période de temps est après un exercice physique, et dans lequel la première portion est donnée au cours d'une période de temps de 0 à 30 minutes après le point de départ.

2. Procédé non thérapeutique selon la revendication 1, dans lequel les protéines sont des protéines à base de lait comprenant des, de préférence constituées de, protéines lactosériques et protéines de caséine, et/ou protéines à base de soja.

3. Procédé non thérapeutique selon l'une quelconque des revendications 1 et 2, dans lequel le nombre de portions est d'au moins 2, de préférence 3 ou 4.

4. Procédé non thérapeutique selon l'une quelconque des revendications 1 à 3, dans lequel la composition est administrée en tant que liquide dans un volume de 15 à 50 mL de composition par kilogramme de masse corporelle de l'enfant, et dans lequel la composition a une teneur en protéines de 0,075 à 10 g/100 mL, plus préférablement de 0,75 à 6 g/100 mL.

5. Procédé non thérapeutique selon la revendication 4, dans lequel ladite composition comprend en outre du potassium dans une plage de 0,5 mmol/L à 50 mmol/L et du sodium dans une plage de 20 mmol/L à 50 mmol/L.

6. Procédé non thérapeutique selon la revendication 5, dans lequel ladite composition a une osmolalité de 200 à 270 mOsm.

7. Procédé non thérapeutique selon la revendication 5 ou 6, dans lequel ladite composition a une teneur en énergie de 27 à 30 kcal/100 mL.
